# EUROPÄISCHE PATENTSCHRIFT

(11) **EP 2 567 254 B1**
(45) Veröffentlichungstag und Bekanntmachung des Hinweises auf die Patenterteilung: **12.08.2015**
(21) Anmeldenummer: 11718664.3
(22) Anmeldetag: 03.05.2011
(51) Int. Cl.: G06K 7/10, G01S 13/74, G06K 7/00, H04W 84/18

(54) **NETZKNOTEN FÜR EIN DRAHTLOSES SENSORNETZ**
NETWORK NODE FOR A WIRELESS SENSOR NETWORK
NOEUD DE RÉSEAU POUR UN RÉSEAU DE CAPTEURS SANS FIL

(30) Priorität: 04.05.2010 DE 102010019193
(43) Veröffentlichungstag der Anmeldung: 13.03.2013
(73) Patentinhaber: Giesecke & Devrient GmbH, 81677 München (DE)
(72) Erfinder: FINKENZELLER, Klaus, 85774 Unterföhring (DE); SCHULZ, Katharina, 81927 München (DE)
(86) Internationale Anmeldenummer: PCT/EP2011/002198
(87) Internationale Veröffentlichungsnummer: WO 2011/138008

(56) Entgegenhaltungen:
- EP-A1- 1 820 139
- WO-A1-2004/004196
- WO-A1-2008/065337
- CARBUNAR B ET AL: "Efficient tag detection in RFID systems", JOURNAL OF PARALLEL AND DISTRIBUTED COMPUTING, ELSEVIER, AMSTERDAM, NL, Bd. 69, Nr. 2, 1. Februar 2009 (2009-02-01), Seiten 180-196, XP025842566, ISSN: 0743-7315, DOI: DOI:10.1016/J.JPDC.2008.06.013 [gefunden am 2008-07-08]

## Beschreibung

Die Erfindung betrifft einen Netzknoten für ein drahtloses Kommunikationsnetz, insbesondere für ein drahtloses Sensornetz, der über eine Kommunikationseinrichtung mit anderen Netzknoten in dem Sensornetz kommunizieren kann.

Die in drahtlosen Kommunikationsnetzen und insbesondere in drahtlosen Sensornetzen verwendeten Netzknoten beinhalten zur drahtlosen Kommunikation mit anderen Netzknoten entsprechende Kommunikationseinrichtungen. Da Netzknoten in drahtlosen Kommunikationsnetzen oftmals autark durch einen Energiespeicher in der Form einer Batterie bzw. eines Akkumulators betrieben werden, sind die Sendeleistungen der Kommunikationseinrichtungen in der Regel gering. Die Netzknoten ermöglichen somit keine RFID-Kommunikation mit einem entsprechenden Transponder, bei der in der Regel höhere Sendeleistungen verwendet werden, um den Transponder über kontaktlos übertragene Kommunikationssignale auch mit Energie zu versorgen.

Im Rahmen einer Nahfeld-Kommunikation zwischen einem RFID-Kommunikationsgerät und einem Transponder ist es aus der Druckschrift EP 1820 139 B1 bekannt, dass das Kommunikationsgerät sowohl in einem Kommunikationsmodus als auch in einem Detektionsmodus betreibbar ist. Im Rahmen des Kommunikationsmodus erfolgt die herkömmliche RFID-Kommunikation über kontaktlos übermittelte Kommunikationssignale, wohingegen im Detektionsmodus Detektionssignale mit einer geringeren Sendeleistung als die Kommunikationssignale im Kommunikationsmodus ausgesendet werden. In dem Kommunikationsgerät ist dabei eine Empfangseinrichtung zum Empfang von an einem Transponder reflektierten Detektionssignalen vorgesehen, welche die reflektierten Detektionssignale auswertet und hierüber die Anwesenheit des Transponders in einem definierten Gebiet um das Kommunikationsgerät detektiert.

Aus der Druckschrift EP 1988 487 A1 ist es bekannt, ein IC-Karten-Lesegerät in einem energiesparenden Erkennungsmodus zu betreiben, bis eine kontaktlose IC-Karte an das Lesegerät angenähert wird, um dann in einen Kommunikationsmodus zur Kommunikation mit der IC-Karte zu wechseln. Dabei wird die Anwesenheit der IC-Karte über die Überwachung des Energieverbrauchs des im Lesegerät verwendeten Oszillators detektiert, wobei eine IC-Karte in der Umgebung des Lesegeräts zu einem Abfall des Oszillatorstroms führt.

Aus der US 20080111661 A1 ist ein energiesparendes Verfahren zum Aufbau einer Kommunikation zwischen einem Lesegerät und einer Mehrzahl von in dessen Lesefeld befindlichen RFID-Tags bekannt. Die RFID-Tags antworten grundsätzlich auf ein von dem Lesegerät ausgesandtes Abfragesignal in bestimmten Zeitschlitzen mit einer Tag-Identifikationsinformation. Um den Energieverbrauch für die Abfrageprozedur zu senken erhöht das Lesegerät die Übertragungsenergie, und damit die Reichweite, des Abfragesignals in mehreren Stufen, beginnend mit der geringsten Energie. Den zu wählenden Energiewert ermittelt das Lesegerät insbesondere aus einer Abschätzung der Anzahl anwesender RFID-Tags.

Aus der US 20070159331 A1 ist ein Verfahren zur Kommunikation mit Gegenständen beschrieben, die mit einer RFID-Einheit ausgestattet sind. Die RFID-Einheit ist in einer ersten Betriebsart als passiver Transponder und in einer zweiten Betriebsart als aktive Sende/Empfängereinheit betreibbar. Für die zweite Betriebsart verfügt die RFID-Einheit über eine lokale eigene Energieversorgung, z.B. in Form einer Batterie. Grundsätzlich wird die RFID-Einheit in der ersten Betriebsart betrieben. Nur bei Eintritt bestimmter Ereignisse wird, um den Energievorrat zu schonen, auf die zweite Betriebsart umgestellt.

Aus der WO 2004/004196 A1 ist eine Sende/Empfängereinheit bekannt, die in einem ersten Betriebsmodus als Bluetooth-Gerät betreibbar ist und in einem zweiten Betriebsmodus als RFID-Einheit.

Aus der Veröffentlichung "Efficient tag detection in RFID systems" von B. Garbunar et al, im "Journal of Parallel and Distributed Computing" Nr. 69, S. 180 bis 196, 2009, ist ein Vorschlag bekannt, wie die Erkennung von in einem Feld einer RFID-Leseeinrichtung anwesenden Transpondern eindeutig und effizient erfolgen kann.

Aus der WO 2008/065337 A1 ist ein RFID-Transponder bekannt, der über eine Steuereinheit verfügt, welche den RFID-Transponder in einen Energiesparmodus schaltet, wenn er sich nicht im Lesefeld einer Sende/Empfängereinheit befindet.

Aufgabe der Erfindung ist es, eine energieeffiziente Kommunikation eines Netzknotens in einem drahtlosen Kommunikationsnetz sowohl mit anderen Netzknoten des Kommunikationsnetzes als auch mit einem Transponder im Umfeld des Netzknotens zu ermöglichen. Diese Aufgabe wird durch den Netzknoten gemäß Patentanspruch 1 bzw. das Verfahren gemäß Patentanspruch 8 gelöst. Weiterbildungen der Erfindung sind in den abhängigen Ansprüchen definiert. Der erfindungsgemäße Netzknoten, der vorzugsweise ein Sensornetzknoten für ein drahtloses Sensornetz ist, umfasst eine Kommunikationseinrichtung, welche in einem ersten Kommunikationsmodus und in einem zweiten Kommunikationsmodus betreibbar ist. Im ersten Kommunikationsmodus sendet die Kommunikationseinrichtung erste Kommunikationssignale zur kontaktlosen Kommunikation mit anderen Netzknoten im Kommunikationsnetz mit einer ersten Sendeleistung aus. Der erste Kornmunikationsmodus entspricht somit dem herkömmlichen Betriebsmodus eines Netzknotens in einem drahtlosen Kommunikationsnetz.

Die erste Sendeleistung ist dabei geringer als eine herkömmlicherweise für eine RFID-Kommunikation verwendete Sendeleistung. Insbesondere liegt die erste Sendeleistung zwischen 0,001 und 0,1 Watt.

Die Kommunikationseinrichtung ist darüber hinaus in einem zweiten Kommunikationsmodus betreibbar, in dem die Kommunikationseinrichtung zweite Kommunikationssignale zur Kommunikation mit einem Transponder mit einer zweiten Sendeleistung aussendet, welche höher als die erste Sendeleistung ist und eine RFID-Kommunikation ermöglicht. Vorzugsweise liegt die zweite Sendeleistung zwischen 0,5 und 4 Watt. Die Kommunikationseinrichtung des erfindungsgemäßen Netzknotens zeichnet sich hierbei dadurch aus, dass sie die Detektion der Anwesenheit eines Transponders mittels der ersten Kommunikationssignale im ersten Kommunikationsmodus ermöglicht. Die ersten Kommunikationssignale übernehmen somit nicht nur die Aufgabe einer Kommunikationsübermittlung zwischen Netzknoten im Kommunikationsnetz, sondern sie werden auch als entsprechende Detektionssignale zur Detektion der Anwesenheit eines Transponders in der Umgebung des Netzknotens genutzt.

In einer besonders bevorzugten Ausführungsform erfolgt die Detektion der Anwesenheit des Transponders basierend auf dem in der Druckschrift EP 1 820 139 B1 beschriebenen Verfahren. In dem dort beschriebenen Verfahren wird zur Detektion In dem dort beschriebenen Verfahren wird zur Detektion der Anwesenheit eines Transponders eine Empfangseinrichtung zum Empfang von an einem Transponder reflektierten Detektionssignalen verwendet, wobei die Empfangseinrichtung die reflektierten Detektionssignale auswerten kann, um die Anwesenheit eines Transponders in einem definierten Gebiet zu detektieren. Diese Detektionssignale werden gemäß der vorliegenden Erfindung nunmehr durch die ersten Kommunikationssignale im ersten Kommunikationsmodus repräsentiert.

In einer Variante des erfindungsgemäßen Verfahrens übernimmt die Empfangseinrichtung neben der Detektion der Anwesenheit eines Transponders auch die Auswertung der im ersten Kommunikationsmodus von anderen Netzknoten ausgesendeten ersten Kommunikationssignalen, um die in den ersten Kommunikationssignalen enthaltenen Informationen der anderen Netzknoten zu extrahieren. Gegebenfalls besteht jedoch auch die Möglichkeit, dass für diese Auswertung ein oder mehrere separate Empfangseinrichtungen verwendet werden.

In einer weiteren Ausgestaltung wertet die zur Detektion der Anwesenheit des Transponders verwendete Empfangseinrichtung auch die im zweiten Kommunikationsmodus von einem Transponder reflektierten zweiten Kommunikationssignale aus, um die in den zweiten Kommunikationssignalen vom Transponder übermittelten Informationen zu extrahieren. Gegebenenfalls besteht jedoch auch die Möglichkeit, dass eine oder mehrere weitere Empfangseinrichtungen zum Empfang und zum Auswerten der zweiten Kommunikationssignale verwendet werden.

Um auf einfache Weise die Verwendung der ersten Kommunikationssignale als Detektionssignale zu ermöglichen, werden in einer bevorzugten Ausführungsform die ersten Kommunikationssignale durch die Kommunikationseinrichtung mit einem Modulationsverfahren moduliert. Über diese Modulation kann insbesondere ermittelt werden, ob es sich bei dem ersten Kommunikationssignal um ein von einem Transponder reflektiertes Kommunikationssignal oder um ein von einem anderen Netzknoten stammendes Kommunikationssignal handelt. Als Modulation wird dabei vorzugsweise eine Frequenz- und/ oder Phasenmodulation eingesetzt, bei der die Amplitude des Signals konstant ist und damit die Detektion eines Transponders basierend auf der Signalstärke des reflektierten ersten Kommunikationssignals ermöglicht wird.

In einer weiteren Ausgestaltung des erfindungsgemäßen Netzknotens ist die Kommunikationseinrichtung derart ausgestaltet, dass von der ersten auf die zweite Sendeleistung gewechselt wird, wenn die Anwesenheit eines Transponders detektiert wird. Das heißt, es wird hierdurch von dem ersten in den zweiten Kommunikationsmodus übergegangen. In dem zweiten Kommunikationsmodus fungiert die Kommunikationseinrichtung dann als RFID-Lesegerät für den detektierten Transponder. Der Übergang von dem ersten in den zweiten Kommunikationsmodus ist dabei vorzugsweise nur temporär. Insbesondere wird nach einem Wechsel von der ersten auf die zweite Sendeleistung aufgrund der Detektion der Anwesenheit eines Transponders wieder auf die erste Sendeleistung gewechselt, wenn eine vorbestimmte

Zeitspanne abgelaufen ist und/oder eine Kommunikation mit dem Transponder im zweiten Kommunikationsmodus beendet ist und/ oder der Transponder nicht mehr in Reichweite der Kommunikationseinrichtung ist. In einer weiteren Ausgestaltung des erfindungsgemäßen Verfahrens wird ein besonders energiesparender Betrieb im Rahmen des ersten Kommunikationsmodus ermöglicht. Insbesondere ist die erste Sendeleistung für den ersten Kommunikationsmodus dabei um wenigstens eine Zehnerpotenz kleiner als die zweite Sendeleistung, wobei die erste Sendeleistung vorzugsweise zwischen 0,001 und 0,1 Watt liegt und die zweite Sendeleistung vorzugsweise 1 Watt oder mehr, insbesondere in etwa 2 Watt, beträgt.

Die über die Kommunikationseinrichtung generierten ersten und/ oder zweiten Kommunikationssignale können Frequenzen im UHF-Frequenzbereich oder im Mikrowellenbereich aufweisen.

Wie bereits erwähnt, erfolgt die Kommunikation im ersten Kommunikationsmodus möglichst energiesparend. Dies kann auch dadurch erreicht werden, dass im ersten Kommunikationsmodus die ersten Kommunikationssignale ohne eine daran gekoppelte Energieübertragung ausgesendet werden, was eine sehr geringe Sendeleistung ermöglicht. Demgegenüber ermöglichen die zweiten Kommunikationssignale auch eine Versorgung des Transponders mit Energie.

Neben dem oben beschriebenen Netzknoten umfasst die Erfindung ferner ein drahtloses Kommunikationsnetz, insbesondere ein Sensornetz, mit einer Mehrzahl von Netzknoten, welche drahtlos miteinander kommunizieren können, wobei das Kommunikationsnetz einen oder mehrere der erfindungsgemäßen Netzknoten, insbesondere ausschließlich solche Netzknoten, umfasst. Die Erfindung betrifft darüber hinaus ein Verfahren zur Detektion der Anwesenheit eines Transponders in einer Umgebung eines Netzknotens in einem drahtlosen Kommunikationsnetz, insbesondere in einem drahtlosen Sensornetz. In diesem Verfahren sendet eine Korrraiunikationseinrichtung des Netzknotens erste Kommunikationssignale zur kontaktlosen Kommunikation mit anderen Netzknoten mit einer Sendeleistung aus, welche geringer als die zur Kornmunikation mit einem Transponder erforderliche Sendeleistung ist. Dabei wird die Anwesenheit eines Transponders in der Umgebung des Netzknotens mittels der ersten Kommunikationssignale detektiert. Die Detektion kann dabei wiederum analog zu dem in der oben genannten Druckschrift EP 1 820 139 B1 beschriebenen Verfahren ausgestaltet sein. Darüber hinaus wird das Verfahren vorzugsweise in dem oben beschriebenen Netzknoten eingesetzt, der einen Betrieb in einem ersten und einem zweiten Kommunikationsmodus ermöglicht, wobei im ersten Kommunikationsmodus die ersten Kommunikationssignale ausgesendet werden und im zweiten Kommunikationsmodus eine Kommunikation mit einem detektierten Transponder basierend auf zweiten Kommunikationssignalen mit einer erhöhten Sendeleistung durchgeführt wird.

Ausführungsbeispiele der Erfindung werden nachfolgend anhand der beigefügten Figuren detailliert beschrieben.

Es zeigen:
- Fig. 1: einen an sich bekannten Aufbau eines Sensornetzknotens in einem Sensornetzwerk, in dem eine Kommunikationseinrichtung basierend auf der Erfindung integriert werden kann;
- Fig. 2: eine schematische Darstellung einer Ausführungsform einer Kommunikationseinrichtung, welche in einem Sensornetzknoten gemäß der Erfindung integriert ist.

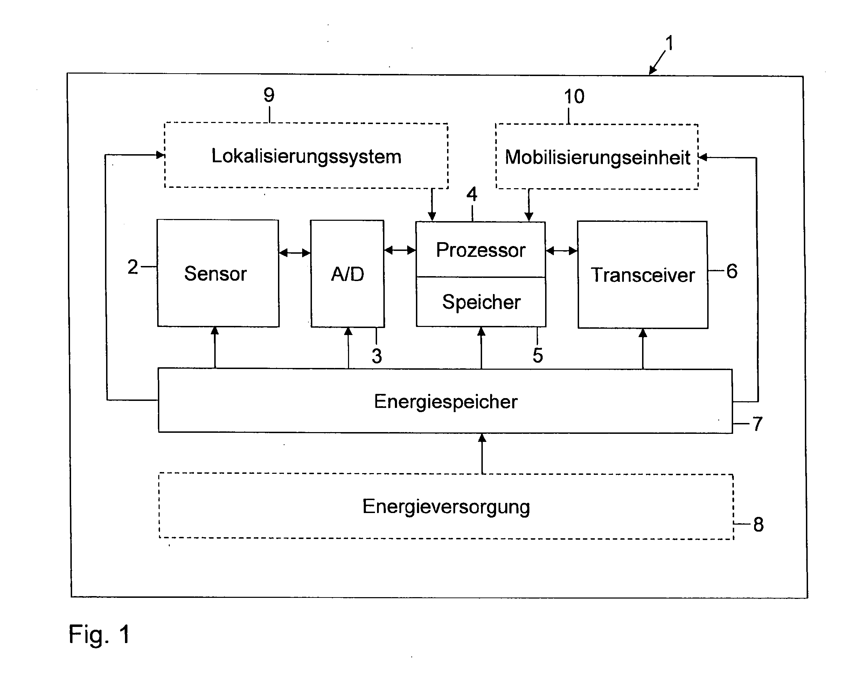

Fig.1 zeigt in schematischer Darstellung einen an sich bekannten Aufbau eines im folgenden Sensornetzknoten genannten Netzknotens 1 zur Verwendung in einem drahtlosen Sensornetz, das mehrere weitere Sensornetzknoten 1 umfaßt. Der Sensornetzknoten 1 umfasst einen Sensor 2, mit dem bestimmte Größen im Umfeld des Sensors 2 gemessen werden können, wie z.B. die Temperatur. Die über den Sensor 2 erfassten Daten werden in geeigneter Weise über einen A/D-Wandler 3 sowie einen Prozessor 4 mit entsprechendem Speicher 5 verarbeitet, um anschließend über einen Transceiver 6 (d.h. eine Sende- und Empfangseinheit) als drahtlose Kommunikationssignale in das Sensornetz übertragen zu werden. Diese Kommunikationssignale können dann von anderen Sensornetzknoten in Reichweite zu dem Sensornetzknoten 1 empfangen und weiterverarbeitet werden. Dabei ist jeder Sensornetzknoten in dem Sensornetzwerk in der Lage, Kommunikationsverbindungen zu anderen Sensornetzknoten in seiner Broadcast-Reichweite aufzubauen und sowohl Kommunikationssignale auszusenden als auch zu empfangen.

Zum Betrieb der einzelnen Komponenten 2 bis 6 des Sensornetzknotens 1 ist ein lokaler Energiespeicher 7 vorgesehen, der als Batterie bzw. Akkumulator ausgestaltet sein kann und die Komponenten 2 bis 6 mit Strom versorgt. Die zwischen den Sensornetzknoten 1 übertragenen Kommunikationssignale dienen nur zur Kommunikationsübermittlung und es erfolgt keine Energieübertragung, wie dies in RFID-Systemen bei der Kommunikation zwischen einem RFID-Lesegerät und einem passiven Transponder der Fall ist. Dementsprechend ist die Sendeleistung des Transceivers 6 gering und ermöglicht auch einen langfristigen Betrieb des Sensornetzknotens 1 mit dem lokalen Energiespeicher 7. Üblicherweise ist die Sendeleistung zur Kommunikation mit anderen Sensornetzknoten 1 um wenigstens eine und vorzugsweise um mehrere Zehnerpotenzen geringer als die Sendeleistung eines herkömmlichen RFID-Lesegeräts im gleichen Frequenzbereich. Als Frequenzbereiche zum Aussenden bzw. Empfangen von Kommunikationssignalen in dem Sensornetzwerk kommen z.B. 466/868/915 MHz bzw. 2,4 GHz in Betracht. Hiermit sind abhängig von der eingesetzten Funktechnologie (Bluetooth, WiFi, ZigBee u.s.w.) Innenraumreichweiten für die einzelnen Sensornetzknoten von 10 m bis 200 m erzielbar.

In dem Sensornetzknoten 1 der Fig. 1 sind neben den beschriebenen Komponenten auch noch optionale Komponenten wiedergegeben, die in gestrichelten Boxen angedeutet sind. Unter anderem kann gegebenenfalls auch eine Energieversorgung 8 vorgesehen sein, mit der ein Sensornetzknoten 1 an ein Energienetz angeschlossen ist, so dass der Sensornetzknoten 1 nicht ausschließlich auf den lokalen Energiespeicher 7 angewiesen ist. Die Energieversorgung 8 kann insbesondere auch die Gestalt einer separaten autarken, vorzugsweise regenerativen Energiequelle haben, die z.B. auf Solarzellen, Themoelementen, Piezokristallen, Dynamoanordnungen o. dgl. beruht. Ebenso können gegebenenfalls ein Lokalisierungssystem 9 und eine Mobilisierungseinheit 10 vorgesehen sein. Mit dem Lokalisierungssystem 9 kann der Ort eines frei im Raum aufstellbaren Sensornetzknotens 1 lokalisiert werden. Die Mobilisierungseinheit 10 ermöglicht die Realisierung von Sensornetzknoten 1, welche sich im Raum selbstständig bewegen können. Der Sensornetzknoten 1 der Fig. 1 bzw. ein darauf basierendes Sensornetz kann für verschiedene Zwecke eingesetzt werden, beispielsweise im Rahmen einer Gebäudeüberwachung bzw. zur Klimaregelung in einem Gebäude, wobei die Daten der einzelnen Sensoren der Sensornetzknoten 1 drahtlos zwischen den Sensornetzknoten 1 ausgetauscht werden und basierend darauf eine entsprechende Regelung von geeigneten Stellgrößen erfolgt.

Der in dem Sensornetzknoten der Fig.1 verwendete Transceiver 6 ist ein Kurzstreckenfunkgerät (englisch: SRD = Short Range Device), das mit einem aktiven Funksender ausgestattet ist und selbstständig in der Lage ist, Kommunikationssignale basierend auf einem hochfrequenten elektromagnetischen Feld auszustrahlen.

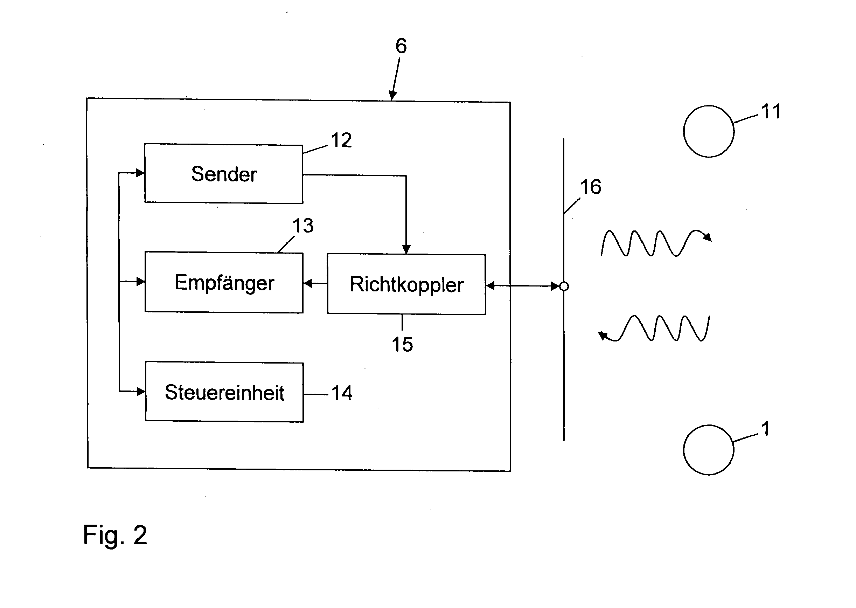

Erfindungsgemäß wurde erkannt, dass die zur Kommunikation mit anderen Sensornetzknoten 1 mit geringer Sendeleistung ausgesendeten Kommunikationssignale, die im folgenden auch als erste Kommunikationssignale bezeichnet werden, auch als Detektionssignale genutzt werden können, um, wie in Figur 2 angedeutet, die Anwesenheit eines Transponders 11 in Ansprechreichweite des Sensornetzknotens 1 zu detektieren. Nach Erkennen eines Transponders 11 kann der Sensornetzknoten 1 dann zweite Kommunikationssignale mit einer höheren Sendeleistung zur RFID-Kommunikation mit dem detektierten Transponder 11 aussenden. Um dies zu ermöglichen, wird ein herkömmlicher Transceiver 6 in einem Sensornetzknoten 1 in geeigneter Weise um eine Detektionseinrichtung erweitert, welche die Detektion von Transpondern 11 basierend auf ersten Kommunikationssignalen ermöglicht.

Fig. 2 zeigt in schematischer Darstellung eine Kommunikationseinrichtung, welche um die oben beschriebene Detektionseinrichtung erweitert ist und erfindungsgemäß als Transceiver 6 in dem Sensornetzknoten 1 der Fig.1 eingesetzt wird. Die Funktionsweise der Kommunikationseinrichtung 6 entspricht dabei dem Kommunikationsgerät gemäß der EP 1 820 139 B1, wobei nunmehr jedoch nicht gesondert Detektionssignale zur Detektion eines Transponders generiert werden, sondern hierfür die oben beschriebenen ersten Kommunikationssignale genutzt werden.

Gemäß Fig. 2 umfasst die Kommunikationseinrichtung 6 einen Sender 12, der in einem ersten Kommunikationsmodus und in einem zweiten Kommunikationsmodus betreibbar ist. Im ersten Kommunikationsmodus werden die ersten Kommunikationssignale zur Kommunikation mit anderen Sensornetzknoten mit einer ersten Sendeleistung ausgesendet. Der Sender 12 ist dabei an einen Richtkoppler 15 gekoppelt, der die ersten Kommunikationssignale basierend auf einem ersten Signalpfad über eine Antenne 16 aussendet. Der Richtkoppler 15 weist ferner einen zweiten Signalpfad auf, über den durch die Antenne 16 empfangene Kommunikationssignale in den Richtkoppler 15 eingespeist werden und zu einem Empfänger 13 gelangen. Dieser Empfänger 13 übernimmt in der Ausführungsform der Fig. 2 sowohl den Empfang und die Auswertung von ersten Kommunikationssignalen im ersten Kommunikationsmodus als auch den Empfang und die Auswertung von zweiten Kommunikationssignalen im zweiten Kommunikationsmodus, wobei dieser zweite Kommunikationsmodus eine Nahfeld-Kommunikation zwischen einem Transponder und der Kommunikationseinrichtung 6 darstellt, die in diesem Fall als RFID-Lesegerät betrieben wird. Ein mit der Kommunikationseinrichtung 6 kommunizierender Transponder ist dabei in Fig. 2 mit Bezugszeichen 11 angedeutet. Ferner ist zur Verdeutlichung, dass die Kommunikationseinrichtung 6 Teil eines Sensornetzwerks ist, ein weiterer Sensornetzknoten 1 in Reichweite zur Kommunikationseinrichtung 6 angedeutet.

Die Kommunikationseinrichtung 6 verfügt ferner über eine Steuereinheit 14, welche sowohl mit dem Sender 12 als auch dem Empfänger 13 gekoppelt ist. Über die Steuereinheit 14 wird das Aussenden und Empfangen von Kommunikationssignalen durch den Sender 12 und den Empfänger 13 gesteuert. Insbesondere schaltet die Steuereinheit 14 basierend auf vom Empfänger 13 stammenden Schaltsignalen den Sender 12 und den Empfänger 13 von dem ersten in den zweiten Kommunikationsmodus und umgekehrt. Bei Betrieb im ersten Kommunikationsmodus sendet der Sender 12 über den Richtkoppler 15 erste Kommunikationssignale mit geringer Sendeleistung aus, welche insbesondere Informationen betreffend die von seinem Sensor ermittelten Sensordaten umfassen. Analog empfängt der Empfänger 13 von anderen Sensornetzknoten 1 ausgesendete erste Kommunikationssignale und kann in geeigneter Weise die darin enthaltenen Informationen auslesen.

Der Empfänger 13 ist zusätzlich um die Funktionalität einer Detektionseinrichtung erweitert, die analog zu der in der Druckschrift EP 1820139 B1 beschriebenen Detektionseinrichtung aufgebaut ist. Der Empfänger 13 analysiert dabei empfangene erste Kommunikationssignale auch dahingehend, ob es sich um zuvor von dem Sender 12 ausgesendete Kommunikationssignale handelt, die von einem Transponder 11 reflektiert wurden. Um die Erkennung einer Reflexion zu unterstützen, sind die vom Sender 12 generierten ersten Kommunikationssignale hierzu zweckmäßig mit einem geeigneten Modulationsverfahren moduliert. Bevorzugt kommt eine Frequenzund/ oder Phasenmodulation zum Einsatz, die in ihrer Amplitude konstant ist und damit die Detektion eines Transponders 11 über die Auswertung der Signalstärke des reflektierten Signals ermöglicht.

Solange sich kein Transponder in der Nähe der Antenne 16 befindet, registriert der Empfänger 13 ein im Wesentlichen konstantes reflektiertes erstes Kommunikationssignal, das durch die Reflexion der von der Antenne 16 abgestrahlten elektromagnetischen Wellen an Gegenständen in der Umgebung der Antenne erzeugt wird. Bei einer Annäherung des Transponders 11 an die Antenne 16 kommt es zu einem Anstieg der Signalstärke des reflektierten ersten Kommunikationssignals. Dieser Anstieg ist besonders signifikant, wenn durch den Sender 12 erste Kommunikationssignale mit einer Frequenz innerhalb des Ansprechfrequenzbereichs des Transponders 11 erzeugt werden, innerhalb dessen üblicherweise auch die Kommunikation mit dem Transponder 11 abgewickelt wird. In diesem Ansprechfrequenzbereich, der sich beispielsweise von 860 MHz bis 930 MHz erstreckt, weist der Transponder 11 einen besonders hohen Rückstreuquerschnitt auf. Demzufolge detektiert der Empfänger 13 die Anwesenheit des Transponders 11 in Reichweite zur Kommunikationseinrichtung 6, wenn die registrierte Signalstärke der reflektierten ersten Kommunikationssignale einen vorgegebenen Wert überschreitet oder sich plötzlich ändert.

Der Empfänger 13 ermöglicht somit sowohl eine Auswertung solcher erster Kommunikationssignale, die von anderen Sensornetzknoten 1 stammen, als auch eine Auswertung von solchen ersten Kommunikationssignalen, die über den Sender 12 ausgesendet und von einem Transponder 11 reflektiert wurden, um basierend auf der Auswertung die Anwesenheit eines Transponders 11 im Umfeld des Sensornetzknotens zu detektieren. Ein Datenaustausch mit einem Transponder 11 erfolgt zum Zeitpunkt der Detektion noch nicht und ist im ersten Kommunikationsmodus aufgrund der hierfür unzureichenden Sendeleistung auch nicht möglich.

Wurde die Anwesenheit eines Transponders 11 detektiert, gibt der Empfänger 13 ein Schaltsignal an die Steuereinheit 14, welche daraufhin den Sender 12 und den Empfänger 13 in den zweiten Kommunikationsmodus schaltet, mit dem im Rahmen einer RFID-Kommunikation ein Datenaustausch zwischen Kommunikationseinrichtung 6 und Transponder 11 ermöglicht wird. In dem zweiten Kommunikationsmodus wird die Sendeleistung des Senders 12 auf einen für eine RFID-Kommunikation benötigten Wert erhöht. Mit der erhöhten Sendeleistung werden dann zweite Kommunikationssignale ausgesendet, mit denen nicht nur Informationen zwischen Kommunikationseinrichtung 6 und Transponder 11 ausgetauscht werden können, sondern der Transponder 11 auch mit Energie versorgt wird. Für die Datenübertragung vom Transponder 11 zur Kommunikationseinrichtung 6 wird dabei der Rückstrahlquerschnitt der (nicht gezeigten) Transponderantenne abhängig von den zu übertragenden Daten moduliert.

Die Erhöhung der Sendeleistung des Senders 12 erfolgt dabei nur für eine begrenzte Zeit nach der Detektion eines Transponders 11. Ist entweder die Kommunikation mit dem Transponder 11 abgeschlossen oder verlässt der Transponder 11 die Ansprechreichweite der Kommunikationseinrichtung 6, wird die Sendeleistung wieder auf den Betrag für eine Kommunikation im ersten Kommunkationsmodus verringert.

Gemäß der Ausführungsform der Fig. 2 werden durch einen einzelnen Empfänger 13 sowohl die Detektion der Anwesenheit eines Transponders 11 als auch die Auswertung der ersten bzw. zweiten Kommunikationssignale zur Extraktion der darin enthaltenen Informationen durchgeführt. Gegebenenfalls ist es jedoch auch möglich, dass diese Funktionalitäten auf mehr als einen Empfänger verteilt werden. Insbesondere können ein Empfänger 13 nur zur Detektion der Anwesenheit eines Transponders 11 ausgestaltet sein, ein oder mehrere weitere Empfänger zur Auswertung der von einem anderen Sensornetzknoten bzw. einem Transponder stammenden Kommunikationssignale verwendet werden. Darüberhinaus besteht auch die Möglichkeit, dass separate Sender zum Aussenden der ersten Kommunikationssignale und der zweiten Kommunikationssignale eingesetzt werden. Insbesondere besteht gegebenenfalls auch die Möglichkeit, dass sich die Frequenzen der ersten Kommunikationssignale von denen des zweiten Kommunikationssignalen unterscheiden.

Die im Vorangegangenen beschriebene Ausführungsform einer erfindungsgemäßen Kommunikationseinrichtung zur Verwendung in einem Sensornetzknoten 1 weist eine Reihe von Vorteilen auf. Insbesondere wird eine zuverlässige Detektion der Anwesenheit eines in der Übertragungsreichweite eines Sensornetzknotens 1 befindlichen Transponders 11 ermöglicht, ohne dass für den Erkennungsvorgang ein inhaltlicher Datenaustausch mit dem Transponder 11 erfolgt, wodurch eine entsprechende Energieübertragung nicht erforderlich ist. Bei der Erkennung der Anwesenheit eines Transponders 11 wird eine Verbesserung der Energiebilanz des entsprechenden Sensornetzknotens 1 dadurch erzielt, dass ohne zusätzlichen Energieaufwand die ausgesendeten ersten Kommunikationssignale durch geeignete Modulation gleichzeitig als Detektionssignale dienen, wobei die vom Transponder 11 reflektierten Detektionssignale empfangen und zur Detektion des Transponders 11 ausgewertet werden. Dabei besteht eine Besonderheit des Sensornetzknotens 1 darin, dass die Sendeleistung des Senders 12 des Sensornetzknotens 1 für eine Kommunikation mit anderen Sensornetzknoten geringer ist als die Sendeleistung, die zur RFID-Kommunikation mit einem Transponder verwendet wird.

## Patentansprüche

1. Netzknotenfüreindrahtloses Kommunikationsnetz umfassend eine drahtlose Kommunikationseinrichtung (6), wobei:
- die Kommunikationseinrichtung (6) derart ausgebildet ist, dass sie in einem ersten Kommunikationsmodus betreibbar ist, in dem die Kommunikationseinrichtung (6) erste Kommunikationssignale zur kontaktlosen Kommunikation mit anderen Netzknoten (1) im Kommunikationsnetz mit einer ersten Sendeleistung aussendet;
- in der Kommunikationseinrichtung (6) eine Empfangseinrichtung (13) zum Empfang von an einem Transponder (11) reflektierten ersten Kommunikationssignalen vorgesehen ist, wobei die Empfangseinrichtung (13) dazu eingerichtet ist die reflektierten ersten Kommunikationssignale auszuwerten, um die Anwesenheit des Transponders (11) in einem definierten Gebiet um den Netzknoten (1) zu detektieren,
**dadurch gekennzeichnet, dass**
- die Kommunikationseinrichtung (6) weiter so ausgebildet ist, dass sie in einem zweiten Kommunikationsmodus betreibbar ist, in dem die Kommunikationseinrichtung (6) zweite Kommunikationssignale zur Kommunikation mit einem Transponder (11) mit einer zweiten Sendeleistung aussendet, wobei die zweite Sendeleistung größer als die erste Sendeleistung ist; und
- die Kommunikationseinrichtung (6) derart ausgestaltet ist, dass von der ersten auf die zweite Sendeleistung gewechselt wird, wenn die Anwesenheit eines Transponders (11) detektiert wurde.

2. Netzknoten nach Anspruch 1, **dadurch gekennzeichnet, dass** die Empfangseinrichtung (13) und/ oder zumindest eine weitere Empfangseinrichtung dazu eingerichtet ist im ersten Kommunikationsmodus die von anderen Netzknoten (1) ausgesendeten ersten Kommunikationssignale auszuwerten, um die in den ersten Kommunikationssignalen enthaltenen Informationen zu extrahieren und sie weiterhin dazu eingerichtet ist die im zweiten Kommunikationsmodus von einem Transponder (11) reflektierten zweiten Kommunikationssignale auszuwerten, um die in den zweiten Kommunikationssignalen vom Transponder (11) übermittelten Informationen zu extrahieren.

3. Netzknoten nach einem der vorhergehenden Ansprüche, **dadurch gekennzeichnet, dass** die Kommunikationseinrichtung (6) derart ausgestaltet ist, dass sie die von ihr ausgesendeten ersten Kommunikationssignale mit einem Modulationsverfahren moduliert.

4. Netzknoten nach einem der vorhergehenden Ansprüche, **dadurch gekennzeichnet, dass** die Kommunikationseinrichtung (6) derart ausgestaltet ist, dass nach einem Wechsel von der ersten auf die zweite Sendeleistung aufgrund der Detektion der Anwesenheit eines Transponders (11) wieder auf die erste Sendeleistung gewechselt wird, wenn eine vorbestimmte Zeitspanne abgelaufen ist und/oder eine Kommunikation mit dem Transponder (11) im zweiten Kommunikationsmodus beendet ist und/ oder der Transponder nicht mehr in Reichweite der Kommunikationseinrichtung ist.

5. Netzknoten nach einem der vorhergehenden Ansprüche, **dadurch gekennzeichnet, dass** die erste Sendeleistung um wenigstens eine Zehnerpotenz kleiner als die zweite Sendeleistung ist, wobei die erste Sendeleistung zwischen 0,001 und 0,1 Watt und die zweite Sendeleistung bei 1 Watt oder mehr liegt.

6. Netzknoten nach einem der vorhergehenden Ansprüche, **dadurch gekennzeichnet, dass** die Kommunikationseinrichtung (6) derart ausgestaltet ist, dass im ersten Kommunikationsmodus die ersten Kommunikationssignale ohne eine daran gekoppelte Energieübertragung ausgesendet werden, wohingegen im zweiten Kommunikationsmodus der Transponder (11) über die zweiten Kommunikationssignale mit Energie versorgbar ist.

7. Drahtloses Kommunikationsnetz mit einer Mehrzahl von Netzknoten (1), welche drahtlos untereinander kommunizieren können, wobei das Kommunikationsnetz einen oder mehrere Netzknoten nach einem der vorhergehenden Ansprüche umfasst.

8. Verfahren zur Detektion der Anwesenheit eines Transponders (11) in einer Umgebung eines Netzknotens (1) in einem drahtlosen Kommunikationsnetz, **dadurch gekennzeichnet, dass** eine Kommunikationseinrichtung (6) des Netzknotens (1) erste Kommunikationssignale zur kontaktlosen Kommunikation mit anderen Netzknoten (1) mit einer Sendeleistung aussendet, welche geringer als die zur Kommunikation mit einem Transponder (11) erforderliche Sendeleistung ist, wobei die Anwesenheit eines Transponders (11) in der Umgebung des Netzknotens (1) mittels der ersten Kommunikationssignale detektiert wird.

## Claims

1. A network node for a wireless communication network comprising a wireless communication device (6), wherein:
- the communication device (6) is configured such that it is operable in a first communication mode, in which the communication device (6) emits, with a first transmit power, first communication signals for contactless communication with other network nodes (1) in the communication network;
- in the communication device (6) there is provided a receiving device (13) for receiving first communication signals reflected on a transponder (11), the receiving device (13) being adapted to evaluate the reflected first communication signals, in order to detect the presence of the transponder (11) in a defined area around the network node (1),
**characterized in that**
- the communication device (6) is further configured such that it is operable in a second communication mode, in which the communication device (6) emits, with a second transmit power, second communication signals for communication with a transponder (11), the second transmit power being greater than the first transmit power; and
- the communication device (6) is configured such that a change is effected from the first to the second transmit power when the presence of a transponder (11) has been detected.

2. The network node according to claim 1, **characterized in that** the receiving device (13) and/or at least one further receiving device is adapted to evaluate in the first communication mode the first communication signals emitted by other network nodes (1), in order to extract the information contained in the first communication signals, and it is further adapted to evaluate the second communication signals reflected from a transponder (11) in the second communication mode, in order to extract the information transmitted by the transponder (11) in the second communication signals.

3. The network node according to any of the preceding claims, **characterized in that** the communication device (6) is configured such that it modulates the first communication signals emitted thereby by a modulation method.

4. The network node according to any of the preceding claims, **characterized in that** the communication device (6) is configured such that after a change from the first to the second transmit power due to the detection of the presence of a transponder (11), there is again effected a change to the first transmit power when a predetermined time period has expired and/or a communication with the transponder (11) in the second communication mode is completed and/or the transponder is no longer in the range of the communication device.

5. The network node according to any of the preceding claims, **characterized in that** the first transmit power is lower by at least one power of ten than the second transmit power, the first transmit power being between 0.001 and 0.1 watt and the second transmit power 1 watt or more.

6. The network node according to any of the preceding claims, **characterized in that** the communication device (6) is configured such that in the first communication mode the first communication signals are emitted without an energy transmission coupled therewith, whereas in the second communication mode the transponder (11) can be supplied with energy via the second communication signals.

7. A wireless communication network with a plurality of network nodes (1) which can wirelessly communicate with each other, wherein the communication network comprises one or several network nodes according to any of the preceding claims.

8. A method for detecting the presence of a transponder (11) in an environment of a network node (1) in a wireless communication network, **characterized in that** a communication device (6) of the network node (1) emits first communication signals for contactless communication with other network nodes (1) with a transmit power which is lower than the transmit power required for communication with a transponder (11), the presence of a transponder (11) in the environment of the network node (1) being detected by means of the first communication signals.

## Revendications

1. Noeud de réseau destiné à un réseau de communication sans fil comprenant un dispositif de communication (6) sans fil, cependant que :
- le dispositif de communication (6) est conçu de telle façon qu'il est exploitable dans un premier mode de communication dans lequel le dispositif de communication (6) émet, à une première puissance d'émission, des premiers signaux de communication pour la communication sans contact avec d'autres noeuds de réseau (1) dans le réseau de communication;
- dans le dispositif de communication (6), un dispositif de réception (13) destiné à la réception de premiers signaux de communication réfléchis par un transpondeur (11) est prévu, le dispositif de réception (13) étant configuré pour évaluer les premiers signaux de communication réfléchis afin de détecter la présence du transpondeur (11) dans une zone définie aux alentours du noeud de réseau (1),
**caractérisé en ce que**
- le dispositif de communication (6) est en outre conçu de telle sorte qu'il est exploitable dans un deuxième mode de communication dans lequel le dispositif de communication (6) émet, à une deuxième puissance d'émission, des deuxièmes signaux de communication pour la communication avec un transpondeur (11), la deuxième puissance d'émission étant supérieure à la première puissance d'émission; et
le dispositif de communication (6) étant réalisé de telle façon qu'un passage de la première puissance d'émission à la deuxième puissance d'émission a lieu quand la présence d'un transpondeur (11) a été détectée.

2. Noeud de réseau selon la revendication 1, **caractérisé en ce que** le dispositif de réception (13) et/ou au moins un dispositif de réception supplémentaire est configuré pour, dans le premier mode de communication, évaluer les premiers signaux de communication émis par d'autres noeuds de réseau (1), afin d'extraire les informations contenues dans les premiers signaux de communication, et qu'il est en outre configuré pour évaluer les deuxièmes signaux de communication réfléchis dans le deuxième mode de communication par un transpondeur (11) afin d'extraire les informations transmises dans les deuxièmes signaux de communication par le transpondeur (11).

3. Noeud de réseau selon une des revendications précédentes, **caractérisé en ce que** le dispositif de communication (6) est réalisé de telle façon qu'il module par un procédé de modulation les premiers signaux de communication émis par lui-même.

4. Noeud de réseau selon une des revendications précédentes, **caractérisé en ce que** le dispositif de communication (6) est réalisé de telle façon que, après un passage de la première à la deuxième puissance d'émission, en raison de la détection de la présence d'un transpondeur (11), un passage à la première puissance d'émission a lieu à nouveau quand un laps de temps prédéterminé s'est écoulé et/ou quand une communication avec le transpondeur (11) dans le deuxième mode de communication est terminée et/ou quand le transpondeur n'est plus à portée du dispositif de communication.

5. Noeud de réseau selon une des revendications précédentes, **caractérisé en ce que** la première puissance d'émission est au moins inférieure d'une puissance de dix à la deuxième puissance d'émission, la première puissance d'émission se situant entre 0,001 et 0,1 watt et la deuxième puissance d'émission se situant aux environs de 1 watt ou davantage.

6. Noeud de réseau selon une des revendications précédentes, **caractérisé en ce que** le dispositif de communication (6) est réalisé de telle façon que, dans le premier mode de communication, les premiers signaux de communication sont émis sans qu'une transmission d'énergie y soit couplée, tandis que, dans le deuxième mode de communication, le transpondeur (11) peut être alimenté en énergie par le biais des deuxièmes signaux de communication.

7. Réseau de communication sans fil ayant une pluralité de noeuds de réseau (1) pouvant communiquer entre eux sans fil, le réseau de communication comprenant un ou plusieurs noeuds de réseau selon une des revendications précédentes.

8. Procédé de détection de la présence d'un transpondeur (11) dans un environnement d'un noeud de réseau (1) dans un réseau de communication sans fil, **caractérisé en ce qu'**un dispositif de communication (6) du noeud de réseau (1) émet, à une puissance d'émission inférieure à la puissance d'émission nécessaire à la communication avec un transpondeur (11), des premiers signaux de communication pour la communication sans contact avec d'autres noeuds de réseau (1), la présence d'un transpondeur (11) dans l'environnement du noeud de réseau (1) étant détectée au moyen des premiers signaux de communication.
